Europäisches Patentamt

European Patent Office

Office européen des brevets

(11) Numéro de publication: **0 240 374 B1**

# FASCICULE DE BREVET EUROPEEN

(45) Date de publication de fascicule du brevet:
15.01.92

(51) Int. Cl.5: **G02B 27/00**

(21) Numéro de dépôt: **87400242.1**

(22) Date de dépôt: **03.02.87**

(54) **Collimateur tête haute et son utilisation pour un viseur de casque.**

(30) Priorité: **04.02.86 FR 8601523**

(43) Date de publication de la demande:
**07.10.87 Bulletin 87/41**

(45) Mention de la délivrance du brevet:
**15.01.92 Bulletin 92/03**

(84) Etats contractants désignés:
**DE GB NL**

(56) Documents cités:
**EP-A- 0 005 245
EP-A- 0 009 332
EP-A- 0 077 193**

**PROCEEDINGS OF THE IEEE 1981 NATIONAL AEROSPACE AND ELECTRONICS CONFE-RENCE, NAECON 1981, Dayton Convention Center, 19-21 mai 1981, vol. 3, pages 1261-1268, IEEE Dayton Section Aerospace and Electronic Systems Society, New York, US; R.L. BERRY: "The lantirn wide field-of-view raster head-up display"**

**DISPLAYS, vol. 4, no. 2, avril 1983, pages 89-96, Butterworth & Co. (Publishers) Ltd, Guildford, Surrey, GB; J.R. BANBURY: "Wide field of view head-up displays"**

(73) Titulaire: **THOMSON-CSF**
**51, Esplanade du Général de Gaulle**
**F-92800 Puteaux(FR)**

(72) Inventeur: **Cheysson, Françoise**
**THOMSON-CSF SCPI 19, avenue de Messine**
**F-75008 Paris(FR)**
Inventeur: **Migozzi, Jean-Blaise**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

Rank Xerox (UK) Business Services

## Description

La présente invention concerne un dispositif de visualisation à grand champ et à rendement optique élevé, suivant lequel une image lumineuse collimatée est observée en superposition sur la vision du paysage extérieur. L'optique collimatrice renvoie à l'infini l'image lumineuse correspondant aux données à collimater ; ceci se traduit par l'absence d'effort d'accommodation pour l'oeil de l'observateur et un grand confort visuel. En utilisation tête haute conventionnelle à bord d'aéronefs, l'image lumineuse est renvoyée par une optique de combinaison vers l'observateur. Cette optique est traversée par le rayonnement provenant du paysage extérieur. Ainsi, l'observateur voit en superposition sur le paysage l'image lumineuse collimatée correspondant, par exemple, à une image synthétique qui traduit des données de navigation aérienne.

Les techniques récentes dans ce domaine des collimateurs tête haute sont dirigées essentiellement vers un accroissement du champ de vision instantanée de l'image collimatée, ainsi que vers l'obtention d'un rendement optique amélioré.

Une solution connue consiste à utiliser un miroir sphérique sur l'axe ce qui permet également de limiter les aberrations optiques. Une solution de ce genre est décrite dans la demande de brevet Français N° 2 542 459 ; suivant cette réalisation, l'axe optique du miroir sphérique correspond à l'axe normal de vision de l'observateur dont l'oeil est placé au centre du miroir. Ce dernier est combiné avec un miroir plan semi-transparent qui a pour rôle de renvoyer l'axe optique du générateur d'images lumineuses vers le miroir sphérique côté concave lequel produit la collimation et renvoie l'image collimatée vers l'observateur. Pour accroître le rendement on utilise un miroir sphérique holographique qui réfléchit la longueur d'onde correspondant au générateur d'image constitué généralement par l'écran d'un tube cathodique. Le principal inconvénient de cette solution est que le champ, bien qu'agrandi, reste cependant limité à des valeurs de l'ordre de 30° à 40°. Pour un accroissement plus important du champ on serait amené à une utilisation hors d'axe du miroir sphérique car le miroir plan partiellement transparent se trouverait trop rapproché de l'oeil de l'observateur. Il en résulterait notamment des aberrations optiques et des difficultés de mise en oeuvre.

Suivant une autre solution, indiquée dans Optical Engineering Sept./Oct. 1985/ Vol. 24__ N° 5/pages 769-780__ article intitulé "Holographic mirrors", on utilise un premier miroir semi-transparent plan pour renvoyer l'axe du générateur d'images lumineuses vers l'oeil de l'observateur. Le rayonnement correspondant réfléchi par ce miroir traverse le miroir sphérique, lequel est suivi par un deuxième miroir semi-transparent perpendiculaire à l'axe optique du miroir sphérique correspondant à la direction normale de vision. L'utilisation de ce deuxième miroir plan semi-transparent est rendu nécessaire par la présence de polariseurs pour polariser le rayonnement de l'image lumineuse et pour la récupérer ensuite après collimation par le miroir sphérique. On obtient ainsi une sélection de la voie du paysage et celle de l'imagerie en fonction de leur polarisation (système dit "pancake") .Cette solution permet une augmentation du champ mais n'est absolument pas performante du point de vue photométrique et pose des problème pour une utilisation en situation réelle. En effet, la transmission sur la voie optique d'observation du paysage est limitée à 6,2 % et celle sur la voie optique d'observation de l'image synthétique est limitée à 1,6 %. Ceci résulte des pertes introduites sur les miroirs lors des multiples réflexions et transmissions, et par traversée des polariseurs. Il n'est pas possible d'utiliser un hologramme, le système étant totalement sur l'axe les voies ne sont pas séparables par holographie.

Il est également connu, par un article intitulé "The lantirn wide field-of-wiew raster head-up display" paru dans Proceedings of the IEEE 1981, NAECON 1981, pages 1261-1268" et par la demande de brevet européen 0 077 193 un dispositif de visualisation dans lequel, grâce à un miroir plan sélectif en incidence, une image collimatée est superposée à l'image du paysage extérieur vue à travers un miroir sphérique. Dans ces dispositifs les miroirs sphériques ne sont pas utilisés sur l'axe de façon que le rayonnement relatif à l'image collimatée, après une première réflexion sur le miroir plan puis sur le miroir sphérique, ne revienne pas sur lui-même et atteigne donc le miroir plan sous incidence différente de la première fois et puisse donc être non pas réfléchi mais transmis. Ces dispositifs entraînent des aberrations du fait que le miroir sphérique n'est pas utilisé sur l'axe.

Le but de l'invention est de réaliser un dispositif de visualisation avec un champ encore agrandi et un rendement énergétique important tout en constituant un système ergonomique. A titre indicatif, la solution proposée dans ce qui suit permet d'obtenir aisément un champ de l'ordre de 50° en site sur environ 80° en gisement, et des rendements jusqu'à 25 % pour la voie image et 45 % pour la voie paysage.

Un autre objet de l'invention est l'utilisation du dispositif de visualisation selon l'invention pour réaliser un viseur de casque.

Selon l'invention, il est proposé un dispositif de visualisation comportant un ensemble optique de collimation et de combinaison groupant un miroir sphérique holographique pour observer le long d'un axe correspondant à la direction normale de vision à partir du centre de ce miroir, une image lumineuse collimatée, et un miroir plan incliné sur ledit axe pour observation de l'image collimatée superposée au paysage extérieur, et un générateur de l'image lumineuse à collimater dont le rayonnement traverse d'abord le miroir sphérique sur lequel il tombe, côté convexe, avec une incidence en dehors de la plage d'incidences pour laquelle le miroir est sélectif à la réflexion, ledit rayonnement traversant ce miroir sphérique en direction du miroir plan, lequel le réfléchit vers le miroir sphérique côté concave, ce dernier le renvoyant à nouveau vers le miroir plan qui le transmet en direction de l'observateur, le dispositif étant caractérisé en ce que le miroir plan est semi-transparent, en ce que ledit ensemble optique est disposé dans un milieu transparent formant une lame à faces parallèles qui constitue un système stigmatique pour l'infini, et en ce que ledit axe correspond à l'axe optique du miroir sphérique.

Les particularités et avantages de l'invention apparaîtront dans la description qui suit donnée à titre d'exemple à l'aide des figures annexées qui représentent :

- Fig. 1 un schéma général d'un dispositif de visualisation conforme à l'invention;
- Fig. 2, un schéma partiel représentant la marche des rayons de la voie image et des angles caractéristiques pour la détermination de l'hologramme du miroir sphérique ;
- Fig. 3, une autre représentation de l'ensemble optique montrant un mode de réalisation ;
- Fig. 4, un schéma relatif à une application à un viseur de casque.

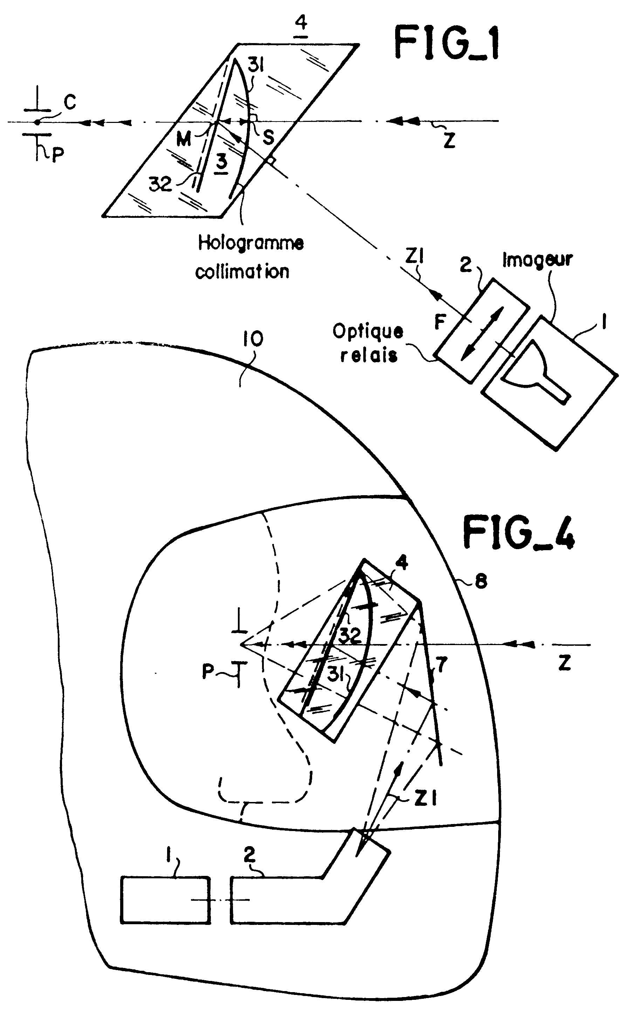

En se reportant à la figure 1 le dispositif de visualisation comporte un ensemble imageur ou générateur d'image constitué à l'aide d'un tube à rayons cathodiques 1, ou tout autre dispositif équivalent, par exemple un matrice à cristaux liquides. Pour bien faire coïncider l'image lumineuse formée sur l'écran du tube 1 avec la surface focale du miroir sphérique, l'imageur 1 et le plus souvent associé à une formule optique relais 2. L'ensemble optique de collimation et de combinaison est constitué par le miroir sphérique 31 et le miroir partiellement transparent 32. Cet ensemble est disposé à l'intérieur d'une lame à faces parallèles 4. L'axe Z1 représente l'axe optique provenant du générateur d'images 1 qui correspond sur le tube au centre de l'image lumineuse. L'axe Z correspond à l'axe optique du miroir sphérique 31 et correspond également à la direction normale de vision pour un observateur placé en C au centre du miroir sphérique 31. On a représenté cet observateur par la pupille d'observation P. Le trajet optique SC correspond au rayon R du miroir sphérique. Le trajet SM + MF correspond à la distance focale du miroir sphérique c'est-à-dire à R/2.

L'utilisation du miroir sphérique 31 sur l'axe limite les aberrations tout en permettant d'accroître considérablement le champ. Le rendement énergétique est accru en effectuant une sélection holographique des deux voies, le miroir 31 comporte à cet effet un hologramme qui sélectionne à la fois sur la longueur d'onde et sur l'angle d'incidence les rayons provenant du générateur d'images 1. La lame semi-transparente 32 permet une séparation angulaire des rayons de l'image avant et après réflexion sur le miroir holographique. On peut ainsi utiliser la sélectivité angulaire de l'hologramme sur la voie image. La lame à faces parallèles 4 est inclinée par rapport à l'axe Z. Ceci ne modifie en rien la conjugaison infiniinfini indispensable pour tout le spectre visible provenant du paysage.

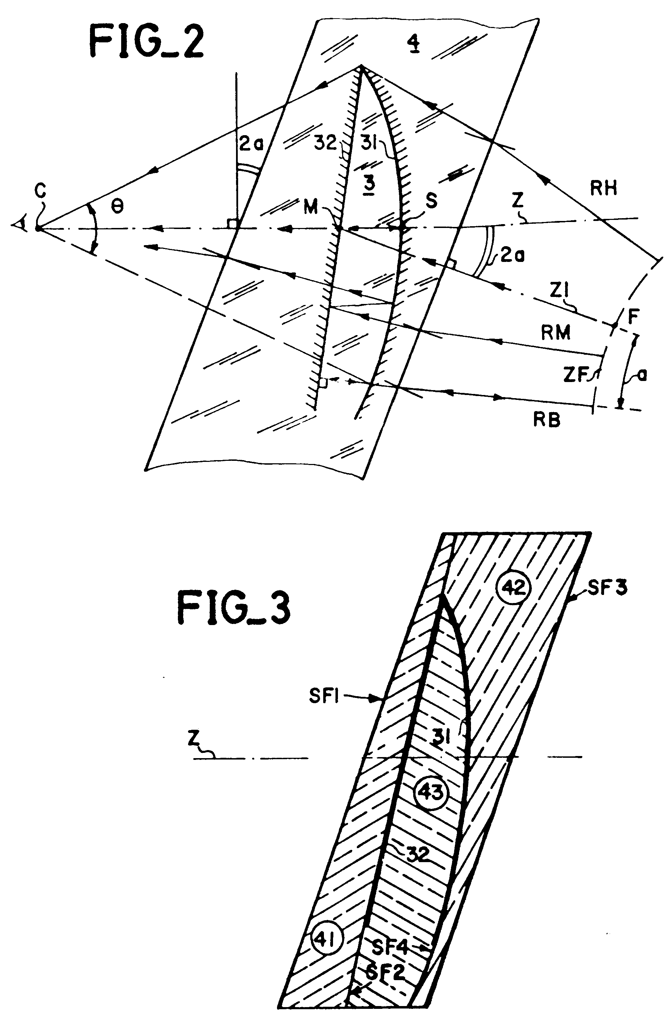

La figure 2 représente de manière plus précise le fonctionnement du dispositif et certaines particularités de construction. L'angle $\theta$ représente le champ instantané de vision en site de l'image lumineuse collimatée. L'angle "a" représente sensiblement la valeur limite du rayon bas RB par rapport à l'axe Z1 du générateur d'images. En effet, après réfraction dans la lame 4 le rayon RB aboutit avec une incidence normale sur le miroir plan 32 et de ce fait est renvoyé selon sa direction d'origine et retourne donc au générateur d'image 1. Il en résulte une limite basse d'observation déterminée pour l'angle de champ $\theta$. L'inclinaison des faces parallèles de la lame 4 par rapport à l'axe Z est choisie de préférence égale à la valeur "2a", laquelle correspond à la valeur angulaire entre les axes optiques Z et Z1. Ainsi, l'axe Z1 tombe avec une incidence normale sur une face latérale de la lame 4 et ne subit pas de déviation angulaire au passage dans cette lame. Il aboutit au point M de rencontre des directions Z et Z1 ; le miroir 32 réfléchit le rayonnement provenant de la direction Z1 selon la direction Z et après le parcours MS ce rayonnement de direction initiale Z1 est renvoyé par le miroir sphérique vers le centre C où il aboutit après traversée du miroir semi-transparent 32 et de la face de sortie de la lame 4. Les parcours optiques sont représentés également pour le rayon haut RH qui aboutit au sommet de l'ensemble 31, 32 et se trouve renvoyé par l'ensemble en direction également de l'oeil en C, et pour rayon quelconque RM montrant le parcours général entre les éléments de l'ensemble optique collimateur et combinateur 31, 32. Pour simplifier la figure on n'a pas tenu compte en sortie sauf, pour le rayon RM, de la réfraction due à la lame 4. A noter également que le schéma n'est pas à l'échelle ; la distance CS correspond au rayon R du miroir sphérique 31 et la distance SM + MF correspond à la distance focale et est égale à la moitié R/2 du rayon de la sphère 31. La zone focale ZF sphérique est obtenue généralement à l'aide de l'optique relais 2 qui modifie la courbure de l'écran cathodique, ou de la matrice d'éléments, utilisé pour constituer le générateur d'images 1.

L'hologramme constitué sur le dioptre sphérique 31 est tel que sur le plan spectral il est efficace pour les rayons lumineux de bande correspondant à celles de l'imageur. Cette bande peut notamment être située dans le vert et correspond à une bande spectrale étroite du spectre visible. La deuxième condition à laquelle satisfait l'hologramme est celle de la plage d'angle d'incidence nécessaire pour obtenir le champ $\theta$ désiré d'observation. Les valeurs d'incidence limites présentées par les rayons extrêmes RH et RB lorsqu'ils arrivent côté convexe du miroir sphérique 31 déterminent une première plage d'incidences pour lesquelles le miroir 31 doit être passant. A ces valeurs correspond, après réflexion sur le miroir plan semi-transparent 32, une deuxième plage d'incidences présentées par le rayonnement de l'imageur lorsqu'il parvient côté concave du miroir sphérique 31. Pour cette deuxième plage l'hologramme est déterminé sélectif et réfléchissant, ce qui entraîne que les plages précitées sont distinctes. L'hologramme n'est pas sélectif à la réflexion pour les rayonnements qui sont situés hors de cette deuxième plage, ou qui se situent en dehors de la bande spectrale sélectionnée. Ainsi le rayonnement du paysage va dans sa quasi-totalité traverser le miroir 31, à l'exception seulement du rayonnement inclu dans le bande spectrale sélectionnée et qui présente une valeur d'incidence comprise dans la gamme d'incidences sélectionnées pour la réflexion.

Du point de vue pertes, il y a lieu de considérer essentiellement les pertes au niveau du miroir partiellement transparent 32 lorsque le rayonnement image d'axe Z1 est réfléchi d'abord par le miroir, puis le traverse après réflexion sur le miroir 31 ; d'autre part, le rayonnement du paysage subit également une traversée de ce miroir et est en partie éliminé par réflexion. On peut considérer cependant que le système a un très bon rendement énergétique étant donné qu'il permet d'obtenir jusqu'à 25 % de transmission énergétique sur la voie image et de l'ordre de 45 % sur la voie du paysage.

La figure 3 représente un mode de réalisation de la lame 4 dans laquelle est inclu l'ensemble collimateur-combineur 31, 32. Ce dispositif est constitué en fait de trois pièces de verre qui viennent s'emboîter les unes dans les autres, une première pièce 41 dont une face SF1 plane constitue une face latérale de la lame 4 et dont l'autre face plane SF2 va recevoir un dépôt correspondant au miroir plan 32 sur une zone d'étendue nécessaire à la constitution de ce miroir pour obtenir le champ d'observation désiré en site et en gisement. Une seconde pièce 42 comporte également une face plane SF3 qui correspond à la deuxième face latérale de la lame 4 et une autre face SF4 usinée de manière à être en partie concave. La partie plane restante de cette face SF4 vient prendre appui sur la partie plane correspondante de la face SF2 de la pièce 41. La troisième pièce 43 comporte une face plane et une face convexe et remplit l'espace entre les pièces 41 et 42. La face convexe reçoit le dépôt qui constitue le miroir sphérique holographique 31. L'ensemble 4 des pièces 41, 42 et 43 sont en un même matériau transparent et de préférence constitué en verre. A noter que le dépôt correspondant au miroir 32 peut être fait sur l'élément central 43.

La figure 4 se rapporte à une application à un viseur de casque, ou à toute utilisation du genre collimateur qui nécessiterait de disposer le générateur d'images du même côté que l'oeil par rapport à l'ensemble optique 4. Dans ce but le rayonnement d'axe Z1 est renvoyé vers l'ensemble 4 au moyen d'un miroir additionnel 7. Le miroir de renvoi 7 peut être un miroir semi-réfléchissant ou avantageusement réalisé sous forme d'une optique holographique répondant à la longueur d'onde de l'imageur 1 et à l'incidence des rayonnements de l'imageur aboutissant sur cet élément. Ainsi, les rayonnements provenant du paysage extérieur et traversant la visière 8 à l'endroit du miroir 7 ne sont pas perturbés excepté ceux répondant aux critères de sélection (longueur d'onde et angle d'incidence) de l'hologramme. On peut également prévoir un dispositif d'escamotage de la lame 4 en dehors du champ visuel durant les périodes où le dispositif collimateur n'est pas utilisé par le pilote.

**Revendications**

1. Dispositif de visualisation comportant un ensemble optique de collimation et de combinaison groupant un miroir sphérique holographique (31) pour observer le long d'un axe (Z) correspondant à la direction normale de vision à partir du centre de ce miroir (31), une image lumineuse collimatée, et un miroir plan (32) incliné sur ledit axe (Z) pour observation de l'image collimatée superposée au paysage extérieur, et un générateur de l'image lumineuse à collimater (1) dont le rayonnement traverse d'abord le miroir sphérique (31) sur lequel il tombe, côté convexe, avec une incidence en dehors de la plage d'incidences pour laquelle le miroir est sélectif à la réflexion, ledit rayonnement traversant ce miroir sphérique en direction du miroir plan (32), lequel le réfléchit vers le miroir sphérique (31) côté concave, ce dernier le renvoyant à nouveau vers le miroir plan (32) qui le transmet en direction de l'observateur, le dispositif étant caractérisé en ce que le miroir plan (32) est semi-transparent, en ce que ledit ensemble optique est disposé dans un milieu transparent formant une lame à faces parallèles (4) qui constitue un système stigmatique pour l'infini, et en ce que ledit axe (Z) correspond à l'axe optique du miroir sphérique (31).

2. Dispositif selon la revendication 1 caractérisé en ce que les faces latérales de la lame (4) sont inclinées par rapport à ladite direction normale de vision (Z) en sorte que l'axe optique (Z1) du rayonnement du générateur d'image (1) tombe avec une incidence normale sur l'une de ces faces et n'est pas dévié.

3. Dispositif de visualisation selon la revendication 1 ou 2, caractérisé en ce que le miroir sphérique (31) comporte un hologramme défini sélectif à la réflexion pour la bande spectrale du générateur d'image (1) et pour la gamme d'angles d'incidence du rayonnement provenant de ce générateur et tombant sur ladite face concave.

4. Dispositif selon la revendication 3 caractérisé en ce que l'axe optique (Z1) du générateur d'image est réfléchi après traversée du miroir sphérique selon ladite direction normale de vision (Z).

5. Dispositif selon l'une quelconque des revendications 1 à 4 caractérisé en ce que le générateur d'image (1) est un tube à rayons cathodiques associé à une optique relais (2).

6. Dispositif selon l'une quelconque des revendications 1 à 4 caractérisé en ce que le générateur d'image (1) est constitué à l'aide d'une matrice à cristaux liquides.

7. Dispositif selon l'une quelconque des revendications 1 à 6, caractérisé en ce quele générateur d'image (1) et le point d'observation (C) sont disposés de part et d'autre de l'ensemble optique (4, 31, 32).

8. Dispositif selon l'une quelconque des revendications 1 à 6, caractérisé en ce que le générateur d'image (1) et le point d'observation (C) sont disposés d'un même côté par rapport à l'ensemble optique (4, 31, 32) et que ce dernier est complété par un miroir de renvoi (7) pour réfléchir le rayonnement du générateur (1) et son axe optique (Z1) vers la face convexe du miroir sphérique (31).

9. Dispositif selon la revendication 8, caractérisé en ce que ledit miroir de renvoi (7) est holographique pour sélectionner à la réflexion le rayonnement du générateur d'image.

10. Dispositif selon la revendication 8 ou 9 utilisé pour constituer un viseur de casque, ledit miroir de renvoi (7) étant monté sur la visière (8) du casque (10) et autorisant le passage du rayonnement visible en provenance du paysage extérieur.

**Claims**

1. A display device comprising an optical collimation and combination unit including a holographic spherical mirror (31) intended to observe a collimated light picture along an axis (Z) corresponding to the normal sight direction and starting from the center of this mirror (31), and a plane mirror (32) which is inclined with respect to said axis (Z) and intended to observe the collimated picture which is superposed to the environment landscape, and a generator (1) for producing the light picture to be collimated whose radiation passes firstly through the spherical mirror (31) which it strikes at the convex side with an angle of incidence outside of the incidence range for which the mirror is selective to reflection, said radiation passing through said spherical mirror in the direction of the plane mirror (32), the latter reflecting it towards the concave side of the spherical mirror (31), this mirror returning the radiation again to the plane mirror (32) which transmits the radiation towards the observer, characterized in that the plane mirror (32) is semitransparent, that said optical unit is disposed in a transparent medium constituting a lamina with parallel faces (4) and constituting a stigmatic system for the infinite, and that said axis (Z) corresponds to the optical axis of the spherical mirror (31).

2. A device according to claim 1, characterized in that the lateral faces of the lamina (4) are inclined with respect to said normal sight direction (Z) such that the optical axis (Z1) of the radiation coming from the picture generator (1) strikes with a normal incidence one of these faces and is not deviated.

3. A display device according to claim 1 or 2, characterized in that the spherical mirror (31) includes a defined hologram which is reflexion-selective for the frequency spectrum of the picture generator (1) and for the range of incidence angles of the radiation coming from this generator and striking said concave surface.

4. A device according to claim 3, characterized in that the optical axis (Z1) of the picture generator is reflected after having transversed the spherical mirror along said normal sight direction (Z).

5. A device according to any one of claims 1 to 4, characterized in that the picture generator (1) is a tube having cathode rays, the tube being associated to an optical relay system (2).

6. A device according to any one of claims 1 to 4, characterized in that the picture generator (1) is constituted by means of a liquid cristal matrix.

7. A device according to any one of claims 1 to 6, characterized in that the picture generator (1) and the observation point (C) are disposed on either side of the optical unit (4, 31, 32).

8. A device according to any one of claims 1 to 6, characterized in that the picture generator (1) and the observation point (C) are disposed on the same side with respect to the optical unit (4, 31, 32) and that the latter is completed by a mirror (7) intended to reflect the radiation of the generator (1) and its optical axis (Z1) towards the convex surface of the spherical mirror (31).

9. A device according to claim 8, characterized in that said mirror (7) is a holographic mirror in order to selectively reflect the radiation of the picture generator.

10. A device according to claim 8 or 9 used for constituting a helmet display device, said mirror (7) being mounted on the visor (8) of the helmet (10) and allowing the visible radiation from the environmental landscape to pass therethrough.

**Patentansprüche**

1. Sichtvorrichtung mit einer optischen Kollimations- und Kombinationseinheit, die einen sphärischen holographischen Spiegel (31) zur Beobachtung eines leuchtenden Kollimationsbilds entlang einer der normalen Sehachse entsprechenden Achse ausgehend vom Zentrum dieses Spiegels (31) mit einem ebenen Spiegel (32) gruppiert, der zu dieser Achse (Z) geneigt ist, um das der äußeren Landschaft überlagerte kollimatierte Bild zu beobachten, und mit einem Generator (1) zur Erzeugung des zu kollimatierenden leuchtenden Bilds, dessen Strahlung zuerst den sphärischen Spiegel durchquert, auf den es von der konvexen Seite aus mit einem Einfallswinkel außerhalb desjenigen Bereichs der Einfallswinkel auftrifft, in dem der Spiegel reflexionsselektiv ist, wobei diese Strahlung den sphärischen Spiegel in Richtung zum ebenen Spiegel (32) durchquert, der sie zur konkaven Seite des sphärischen Spiegels (31) ablenkt, wobei letztere die Strahlung erneut zum ebenen Spiegel (32) zurückwirft, der sie dann zum Beobachter überträgt, dadurch gekennzeichnet, daß der ebene Spiegel (32) halbtransparent ist, daß die optische Einheit in einem lichtdurchlässigen Milieu angeordnet ist, das ein Plättchen mit parallelen Seiten (4) bildet und ein für Unendlich stigmatisches System darstellt, und daß die Achse (Z) der optischen Achse des sphärischen Spiegels (31) entspricht.

2. Vorrichtung nach Anspruch 1, dadurch gekennzeichnet, daß die Seitenflächen des Plättchens (4) bezüglich der normalen Sichtrichtung (Z) so geneigt sind, daß die optische Achse (Z1) der Strahlung des Bildgenerators (1) mit einem senkrechten Einfallswinkel auf eine dieser Flächen fällt und nicht abgelenkt wird.

3. Sichtvorrichtung nach Anspruch 1 oder 2, dadurch gekennzeichnet, daß der sphärische Spiegel (31) ein definiertes Hologramm besitzt, das für den spektralen Frequenzbereich des Bildgenerators (1) und für den Bereich der Einfallswinkel der von diesem Generator kommenden und auf die konkave Spiegelfläche fallenden Strahlung reflexionsselektiv ist.

4. Vorrichtung nach Anspruch 3, dadurch gekennzeichnet, daß die optische Achse (Z1) des Bildgenerators nach Durchgang durch den sphärischen Spiegel in die normale Sichtrichtung (Z) abgelenkt wird.

5. Vorrichtung nach einem beliebigen der Ansprüche 1 bis 4, dadurch gekennzeichnet, daß der Bildgenerator (1) eine Kathodenstrahlröhre ist, die einer Relaisoptik (2) zugeordnet ist.

6. Vorrichtung nach einem beliebigen der Ansprüche 1 bis 4, dadurch gekennzeichnet, daß der Bildgenerator (1) mit Hilfe einer Flüssigkristallmatrix gebildet ist.

7. Vorrichtung nach einem beliebigen der Ansprüche 1 bis 6, dadurch gekennzeichnet, daß der Bildgenerator (1) und der Beobachtungspunkt (C) zu beiden Seiten der optischen Einheit (4, 31, 32) angeordnet sind.

8. Vorrichtung nach einem beliebigen der Ansprüche 1 bis 6, dadurch gekennzeichnet, daß der Bildgenerator und der Beobachtungspunkt (C) auf derselben Seite der optischen Einheit (4, 31, 32) liegen und daß letztere durch einen Umlenkspiegel (7) vervollständigt wird, um die vom Generator (1) kommende Strahlung und seine optische Achse (Z1) zur konvexen Seite des sphärischen Spiegels (31) umzulenken.

9. Vorrichtung nach Anspruch 8, dadurch gekennzeichnet, daß der Umlenkspiegel (7) holographisch ist, um die Strahlung des Bildgenerators selektiv zu reflektieren.

10. Vorrichtung nach Anspruch 8 oder 9 zur Verwendung in einem Helmsichtgerät, wobei der Umlenkspiegel (7) auf dem Visier (8) des Helms (10) angebracht ist und den Durchgang der von der äußeren Landschaft kommenden sichtbaren Strahlung erlaubt.

# FIG_1

Hologramme collimation

Optique relais

Imageur

# FIG_4

FIG_2

FIG_3